# EUROPEAN PATENT SPECIFICATION

(11) **EP 3 453 980 B1**
(45) Date of publication and mention of the grant of the patent: **07.06.2023**
(21) Application number: 18188630.0
(22) Date of filing: 13.08.2018
(51) Int. Cl.: F24F 11/00, F24F 110/00

(54) **HEAT EXCHANGER RADIATOR, VENTILATION ARRANGEMENT OF BUILDING, AND METHOD FOR USING VENTILATION ARRANGEMENT OF BUILDING**
WÄRMETAUSCHERKÜHLER, LÜFTUNGSANORDNUNG EINES GEBÄUDES UND VERFAHREN ZUR VERWENDUNG DER LÜFTUNGSANORDNUNG EINES GEBÄUDES
RADIATEUR D'ÉCHANGEUR DE CHALEUR, AGENCEMENT DE VENTILATION DE BÂTIMENT ET PROCÉDÉ D'UTILISATION D'AGENCEMENT DE VENTILATION DE BÂTIMENT

(30) Priority: 14.08.2017 FI 20175727
(43) Date of publication of application: 13.03.2019
(73) Proprietor: Ika-Air Oy, 33450 Siivikkala (FI)
(72) Inventor: Perttula, Jukka, 33450 Siivikkala (FI)
(74) Representative: Kolster Oy Ab

(56) References cited:
- WO-A1-01/22021
- WO-A2-2009/053726
- WO-A2-2016/162738
- CN-A- 106 052 082
- DE-A1- 4 408 087
- US-A- 3 732 703

## Description

The invention relates to a ventilation arrangement of a building and in particular to such a ventilation arrangement which comprises at least one supply air channel in connection with which there is at least one heat exchanger radiator of supply air to heat /cool supply air, and at least one exhaust air channel in connection with which there is at least one heat exchanger radiator of exhaust air to heat/cool exhaust air, as well as at least one heat exchanger circuit based on the circulation of heat transfer liquid to conduct heating/cooling to the heat exchanger radiator of the supply air channel and the heat exchanger radiator of the exhaust air channel.

Ventilation systems of the type described in the above are typically used in large public buildings, for example. It is also often typical in these buildings to decrease the ventilation efficiency when presumably there are no users present. In such a case, it is possible, for example, to half the rotation speed of a blower in the supply air channel and the blower of the exhaust air channel, whereby the amount of replacement air brought into the building through the supply air channel and the exhaust air removed from the building through the exhaust air channel will be essentially halved compared to the usage situation during normal use of the building. This results in that the amount of electric energy that the use of the blowers requires is reduced as is the amount of that heat energy removed from the building with the exhaust air, which cannot be stored. This reduces the operating costs of the building.

DE-publication 44 08 087 A1 discloses a method for operating a heat exchanger. In particular, the document discloses a ventilation arrangement according to the preamble of claim 1.

### Brief description of the invention

It is an object of the present invention to provide a new type of solution for a ventilation arrangement of a building.

The solution according to the invention is characterized by what is disclosed in the independent claims.

The invention is based on changing the surface area of said supply air and exhaust air heat exchanger radiators, taking part in the heat exchange in relation to a change in the amount of air replaced in the building, and changing the amount of heat transfer liquid fed to said supply air and exhaust air heat exchanger radiator in relation to the change in the amount of air replaced in the building without substantially changing the rate of flow of the heat transfer liquid in the heat exchanger radiators.

The advantage of the invention is that when the surface area of the heat exchanger radiators, which takes part on the heat exchange, is controlled in relation to the amount of air replaced in the building, and controlling the amount of heat transfer liquid fed to said the heat exchanger radiators in relation to a change in the air replaced in the building by nevertheless not substantially changing the rate of flow of the heat transfer liquid in the heat exchanger radiator, the efficiency of heat exchange may be improved compared to the previously known method in which only the amount of air replaced in the building is changed. The present solution achieves the fact that the dimensionless conductance corresponding to the efficiency, which may be represented by a conductance number of the radiator, remains good in different usage situations.

Some embodiments of the invention are presented in the dependent claims.

### Brief description of the figures

Preferred embodiments of the invention are now described in closer detail with reference to the accompanying drawings, in which
Figure 1 shows schematically a ventilation arrangement of a building,
Figure 2a is a schematic side view of a heat exchanger radiator in a usage situation of normal ventilation,
Figure 2b is a schematic front view of a heat exchanger radiator of Figure 2a in a usage situation of normal ventilation,
Figure 3a is a schematic side view of a heat exchanger radiator of Figure 2a in a usage situation of restricted ventilation,
Figure 3b is a schematic front view of a heat exchanger radiator of Figure 2a in a usage situation of restricted ventilation,
Figure 4a is a schematic top view of a second heat exchanger radiator in a usage situation of normal ventilation,
Figure 4b is a schematic front view of a heat exchanger radiator of Figure 4a in a usage situation of restricted ventilation,
Figure 5 schematically shows an embodiment of the ventilation arrangement according to Figure 1,
Figure 6 shows the powers transferred in connection with a prior art ventilation arrangement in a usage situation of restricted ventilation, and
Figure 7 shows the powers transferred in connection with the ventilation arrangement of the invention, dimensioned similarly as the example of Figure 6, in a usage situation of restricted ventilation.

For reasons of clarity, some embodiments of the invention are illustrated in the Figures in a simplified form. In the figures, like reference numerals identify like elements.

### Detailed description of the invention

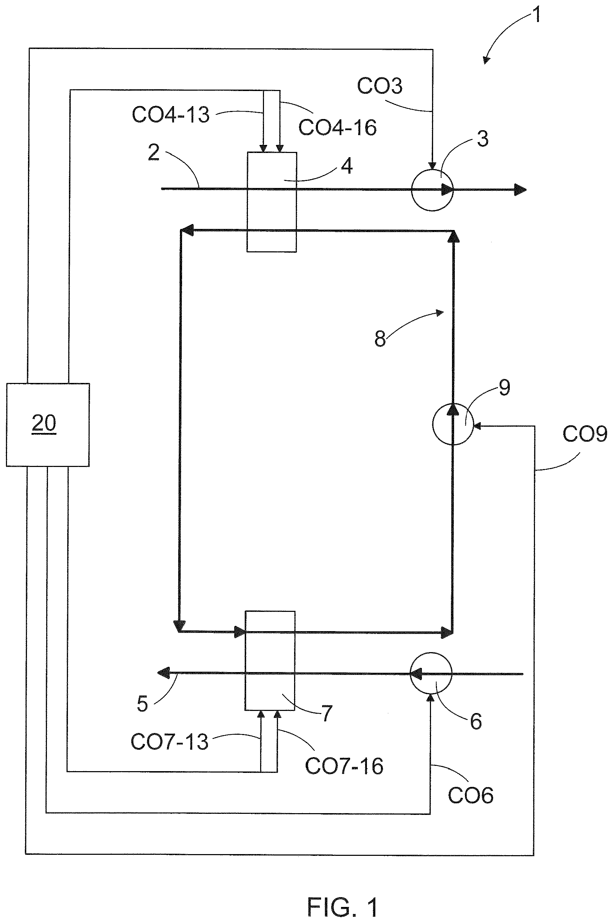

Figure 1 is a schematic view of a ventilation arrangement 1 of a building. The ventilation arrangement 1 shown in Figure 1 includes a supply air channel 2 and a supply air blower 3, by means of which new air may be brought in the building. In the supply air channel 2 there is a heat exchanger radiator 4 of supply air, by means of which the supply air coming in the building may be heated in cold weather and cooled in hot weather. Furthermore, the presented ventilation arrangement 1 includes an exhaust air channel 5 and an exhaust air blower 6, by means of which used air may be removed from the building. In the exhaust air channel 5 there is a heat exchanger radiator 7 of exhaust air, by means of which heat energy from the air removed from the building in cold weather may be stored, and extra heat removed with the air exiting the building in hot weather. Heating or cooling conveyed to the supply air heat exchanger radiator 4 and exhaust air heat exchanger radiator 7 is conducted by a heat exchanger circuit 8 based on the circulation of the heat transfer liquid, in which a water glycol mixture is used as a circulating heat transfer liquid, which depending on the usage situation, that is, the need to heat or cool the air coming in to the building, is capable of surrendering or receiving heat.

The following will briefly explain the operation of the ventilation arrangement 1 according to the direction of flow of the heat transfer liquid flowing in the heat exchanger circuit 8, starting the description at the supply air heat exchanger radiator 4 in a usage situation in which new air, or supply air, brought into a building is heated with such heat that is recovered from air removed from the building, or exhaust air.

To the heat exchanger radiator 4 adapted in connection with the supply air channel 2, heat transfer liquid pumped by a pump 9 belonging to the heat exchanger circuit 8 flows along the heat exchanger circuit 8 in Figure 1 from the right. The heat transfer liquid surrenders heat energy in the supply air heat exchanger radiator 4 to the colder supply air coming in the building through the supply air channel 2 so that the air coming in the building heats up, and the heat transfer liquid going out of the supply air heat exchanger radiator 4, so in Figure 1 to the left, cools down. The supply air radiator 4 has appropriate heat exchanger cells, which keep the air and liquid flows separate from each other but allowing heat energy to be transferred between them. As the heat transfer liquid, water glycol mixture, for example, may be used.

The heat exchanger liquid flowing out of the heat exchanger radiator 4 flows next, on the left in Figure 1, to the exhaust air heat exchanger radiator 7, arranged in connection with the exhaust air channel 5. In the exhaust air heat exchanger radiator 7, the heat transfer liquid receives heat energy from the warmer exhaust air so that the air removed from the building cools down and the heat transfer liquid flowing out of the exhaust air heat exchanger radiator 7, so to the right in Figure 1, warms up. The exhaust air heat exchanger radiator 7 has appropriate heat exchanger cells, which keep the air and liquid flows separate from each other but allowing heat energy to be transferred between them. Thus, by means of the exhaust air heat exchanger radiator 7 heat energy may be recovered from the air removed from the building through the exhaust air channel 5. The heat exchanger liquid flowing out of the heat exchanger radiator 7 flows back to the supply air heat exchanger radiator 4 along the heat exchanger circuit 8, from the right in Figure 1.

In such a usage situation in which new air, or supply air, brought in a building is cooled by transferring heat from it to the air removed from the building, or exhaust air, the operation is in other respects similar but the heat transfer liquid in the supply air heat exchanger radiator 4 receives heat energy from the warmer supply air coming in the building through the supply air channel 2 so that the air coming in the building cools down, and the heat transfer liquid going out of the supply air heat exchanger radiator 4, so in Figure 1 to the left, warms up. In the exhaust air heat exchanger radiator 7, the heat transfer liquid surrenders heat energy to the cooler exhaust air so that the air removed from the building warms up and the heat transfer liquid flowing out of the exhaust air heat exchanger radiator 7, so to the right in Figure 1, cools down.

The ventilation arrangement 1 shown in Figure 1 may further include a heat pump arrangement, the purpose of which is to enhance the transfer of heat to the heat transfer liquid and/or out of it. The heat pump arrangement may comprise an evaporator, condenser, a refrigerant circuit circulating between the evaporator and condenser, and a compressor to circulate the refrigerant circulating between the evaporator and condenser.

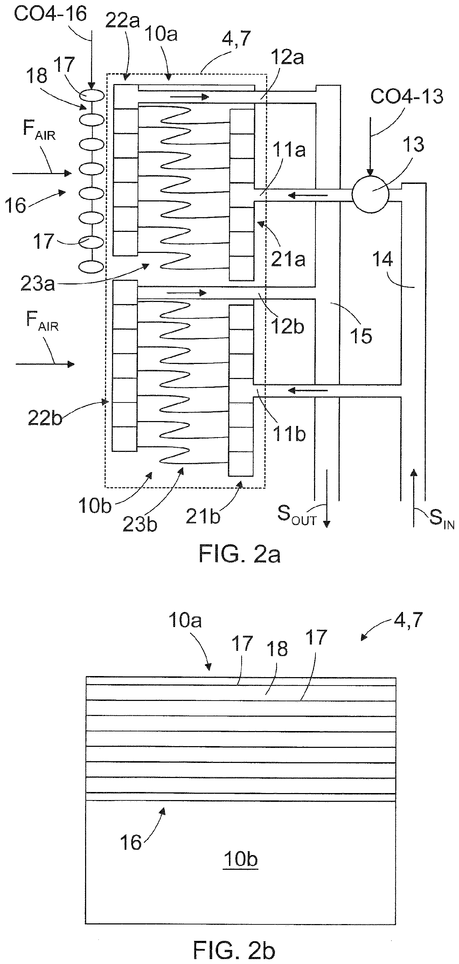

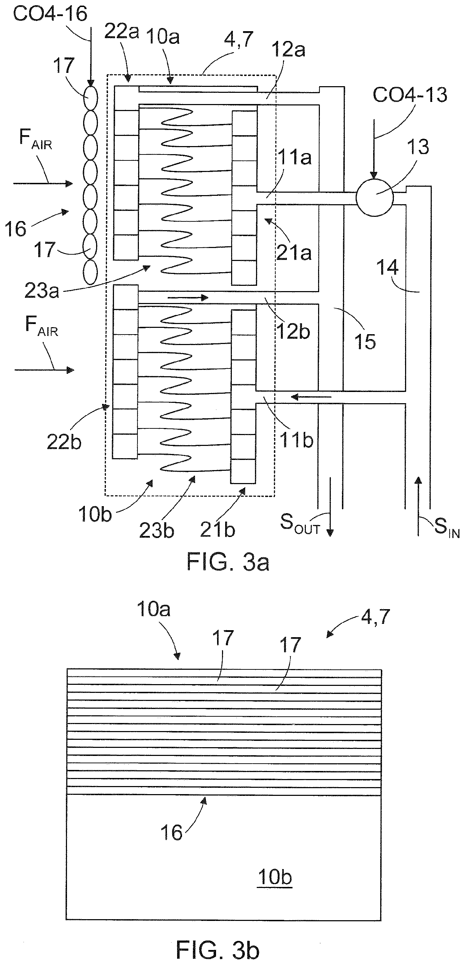

Figure 2 is a schematic side view of a heat exchanger radiator in a usage situation of normal ventilation, and Figure 2b is a schematic front view of a heat exchanger radiator of Figure 2a in a usage situation of normal ventilation. Figure 3a is a schematic side view of a heat exchanger radiator of Figure 2a in a usage situation of restricted ventilation, and Figure 3b is a schematic front view of a heat exchanger radiator of Figure 2a in a usage situation of restricted ventilation. In a usage situation of restricted ventilation, the power of the supply air blower 3 in the supply air channel 2 and the exhaust air blower 6 in the exhaust air channel 5 is lowered, such as halved as referred to in the prior art section, in order to reduce the amount of replacement air brought in the building and exhaust air removed out from the building to substantially one half of what it is in a usage situation of normal ventilation.

The heat exchanger radiator shown in Figures 2a, 2b, 3a, 3b is suitable for used both as a supply air heat exchanger radiator 4 and exhaust air heat exchanger radiator 7, due to which the heat exchanger radiator shown in Figures 2a, 2b, 3a, 3b is indicated by both reference number 4 and reference number 7, that is, a common reference number 4, 7. The heat exchanger radiator 4, 7 is a liquid-gas heat exchanger radiator, in which heat is transferred from a liquid flow at a higher temperature to a gas flow at a lower temperature, or vice versa.

The heat exchanger radiator 4, 7 comprises a first liquid-gas heat exchanger cell 10a and a second liquid gas exchanger cell 10b, adapted in a substantially transverse direction in relation to the flow direction F_{AIR} of the air coming to the heat exchanger radiator 4, parallel to said first liquid-gas heat exchanger cell 10a. In the heat exchanger cells 10a, 10b, heat is transferred between air flowing through each heat exchanger cell 10a, 10b and heat transfer liquid flowing through each heat exchanger cell 10a, 10b. Depending on the intended power of the heat exchanger radiator 4, there may be more of said heat exchanger cells 10a, 10b arranged substantially in parallel. In liquid-gas heat exchanger cells, the heat transfer liquid flows along cell-internal closed flow channels and either surrenders heat to the air or another gas flowing through the cell or receives heat from the air or another gas flowing through the cell.

The first heat exchanger cell 10a comprises a feed opening 11a and an inlet side manifold 21a to feed the heat transfer liquid to the heat exchanger cell 10, an outlet opening 12a and outlet side manifold 22a to remove the heat transfer liquid from the heat exchanger cell 10a, and circulating pipes 23a of the heat transfer liquid. The feed opening 11a is in a flow connection to an inlet channel 14 bringing heat transfer liquid to the heat exchanger radiator 4, 7 and the outlet opening 12a is in a flow connection to an outlet channel 15 transferring heat transfer liquid from the heat exchanger radiator 4, 7. The flow of heat transfer liquid to the heat exchanger radiator 4, 7 is indicated by an arrow marked with the reference mark S_{IN} and the flow of heat transfer liquid away from the heat exchanger radiator 4, 7 by an arrow marked with the reference mark S_{OUT}. In connection with the feed opening 11a, an openable and closable feed valve 13 has been adapted, in an opened mode of which the flow of heat transfer liquid to the first heat exchanger cell 10a is allowed, and in a closed mode of which the flow of heat transfer liquid to the first heat exchanger cell 10a is prevented. The feed valve 13 may be arranged as part of the heat exchanger radiator 4, 7, as part of the feed opening 11a, for example. Alternatively, the feed valve 13 may be separate from the heat exchanger radiator 4, 7 and placed in any suitable place in the inlet channel 14 so that the flow of heat transfer liquid to the first heat exchanger cell 10a may be prevented by closing said feed valve 13.

The second heat exchanger cell 10b comprises a feed opening 11b and an inlet side manifold 21b to feed the heat transfer liquid to the heat exchanger cell 10b, an outlet opening 12b and outlet side manifold 22b to remove the heat transfer liquid from the heat exchanger cell 10b, and circulating pipes 23b of the heat transfer liquid. The feed opening 11b is in a flow connection to an inlet channel 14 bringing heat transfer liquid to the heat exchanger radiator 4, 7 and the outlet opening 12b is in a flow connection to an outlet channel 15 transferring heat transfer liquid from the heat exchanger radiator 4, 7. There is no feed valve of the type of the feed valve 13 arranged in connection with the second heat exchanger cell 10b, but the heat transfer liquid is free to circulate in the second heat exchanger cell 10b whenever the circulation of the heat transfer liquid is on.

Depending on the physical size or intended power of each heat exchanger cell, the first 10a and second 10b heat exchange cell may have more than one feed openings to feed heat transfer liquid to the heat exchanger cell and more than one outlet opening to remove heat exchange liquid from the heat exchange cell. In this case there is a feed valve 13 in connection with each feed opening 11a connected to the first heat exchange cell 10a.

The heat exchanger radiator 4, 7 further comprises a shutter 16 which forms a shutter element allocated in the first heat exchange cell 10a or relating to the first heat exchange cell 10a, which, when it is in an opened mode, allows air flow through the first heat exchange cell 10a, and in a closed mode, air flow through the first heat exchange cell 10a is prevented. As the shutter 16, a multiple leaf damper, for example, may be used.

In the embodiment of Figure 2a, 2b, 3a, 3b the shutter 16 is adapted on the side receiving air flow on the first heat exchanger cell 10a, that is, on the front side of the first heat exchanger cell 10a, where by air flow through the first heat exchanger cell 10a may be prevented. Alternatively, the shutter 16 may be placed on the opposite side of the first heat exchanger cell 10a in relation to the direction of air flow, so the back side of the first heat exchanger cell 10a. In this location, too, the shutter 16 may prevent air flow through the first heat exchanger cell 10a.

In the embodiment shown in Figures 2a, 2b, 3a, 3b the shutter 16 is adapted on the front side of the first heat exchanger cell 10a at a distance from the first heat exchanger cell 10a and separate from it, whereby the shutter 16 may be supported to a frame structure of the heat exchanger radiator 4, 7, not shown in the figures due to reasons of clarity. Alternatively, the shutter 16 may be arranged as part of the first heat exchanger cell 10a.

The shutter 16 shown in Figures 2a, 2b, 3a, 3b comprises in a substantially vertical direction a plurality of adjacent turnable shutter strips 17 at a distance from each other. In the opened mode of the shutter 16 shown in Figures 2a and 2b, the shutter strips 17 are adapted to arrange themselves substantially horizontally, allowing air flow through the free spaces 18 between the shutter strips 17 to the first heat exchanger cell 10a and further through it. In the closed mode of the shutter 16 shown in Figures 3a and 3b, the shutter strips 17 are adapted to arrange themselves substantially vertically and possibly partly overlapping, preventing air flow through the shutter 16 to the first heat exchanger cell 10a.

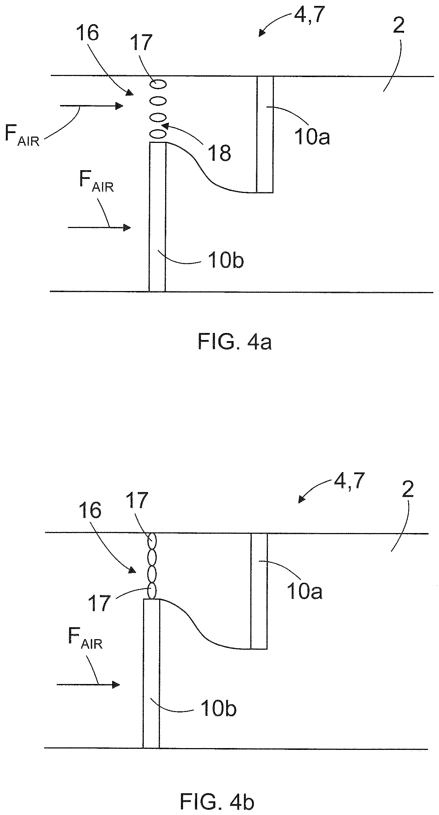

Figure 4a is a schematic top view of a heat exchanger radiator in a usage situation of normal ventilation, and Figure 4b is a schematic front view of a heat exchanger radiator of Figure 4a in a usage situation of restricted ventilation. As in the above, the heat exchanger radiator shown in Figures 4a, and 4b may be either a supply air heat exchanger radiator 4 or exhaust air heat exchanger radiator 7, due to which the heat exchanger radiator shown in Figures 4a, 4b is indicated by both reference number 4 and reference number 7, that is, a common reference number 4, 7.

The heat exchanger radiator 4, 7 shown in Figures 4a and 4b comprises a first liquid-gas heat exchanger cell 10a and a second liquid gas exchanger cell 10b, adapted in a substantially transverse direction in relation to the flow direction F_{AIR} of the air coming to the heat exchanger radiator 4, 7, parallel to said first liquid-gas heat exchanger cell 10a. Differing from the solution of Figures 2a, 2b, 3a, 3b, the first heat exchanger cell 10a is adapted at a distance from the second heat exchanger cell 10b in the air flow direction F_{AIR} coming to the heat exchanger radiator 4, 7, to the direction indicated by the air flow direction F_{AIR} coming to the heat exchanger radiator 4, 7. With respect to the flow direction F_{AIR} of air coming to the heat exchanger radiator 4, 7 the first heat exchanger cell 10a and second heat exchanger cell 10b further partly overlap each other.

The heat exchanger radiator 4, 7 of Figures 4a, 4b further comprises a shutter 16 allocated in connection with the first heat exchanger cell 10a in relation to air flow and an air flow guide 19 extending from the shutter 16 to the first heat exchanger cell 10a. The shutter 16 is adapted parallel to the second heat exchanger cell 10b. The task of the air flow guide 19 is to guide the flow of air coming through the shutter 16 in the opened mode of the shutter 16 to the first heat exchanger cell 10a so that it cannot before the first heat exchanger cell 10a mix with the flow of air passing through the second heat exchanger cell 10b. In the opened mode of the shutter 16 shown in Figure 4a, the shutter strips 17 are adapted to arrange themselves substantially horizontally, allowing air flow to the first heat exchanger cell 10a and further through it through the free spaces 18 between the shutter strips 17 of the shutter 16. In the closed mode of the shutter 16 shown in Figure 4b, the shutter strips 17 are adapted to arrange themselves substantially vertically and possibly partly overlapping, preventing air flow through the shutter 16 to the first heat exchanger cell 10a.

Differing from the embodiment of Figures 4a and 4b, the shutter 16 could be arranged in the direction of flow direction F_{AIR} of air coming to the heat exchanger radiator 4, 7 also on the back side of the first heat exchanger cell 10a, if the air flow guide 19 is adapted to extend from the second heat exchanger cell 10b all the way to the shutter 16.

Differing from the embodiment of Figures 4a and 4b, the shutter 16 could be arranged in the direction of flow direction F_{AIR} of air coming to the heat exchanger radiator 4, 7 also before the second heat exchanger cell 10b, whereby the shutter 16 may be adapted in the flow direction F_{AIR} of air coming to the heat exchanger radiator 4, 7, depending on the embodiment, either to the front side or back side of the first heat exchanger cell 10a. In such a case, said air flow guide 19 is adapted to extend between the first heat exchanger cell 10a and shutter 16 always in such a manner that the air flows passing through the different heat exchanger cells 10a, 10b can possibly only mix with each other after they have passed through the corresponding heat exchanger cell.

With reference to Figures 1, 2a, 2b, 3a, 3b, in particular, the following examines the operation of the ventilation arrangement described above according to an example. Figure 1 further shows a control unit 20 of the ventilation arrangement 1, by means of which the operation of the above devices belonging to the ventilation arrangement are controlled.

The control unit 20 is adapted to control the operation of the supply air blower 3 through a control channel CO3. The control unit 20 is further adapted to control the operation of one or more feed valves 13 in the heat exchanger radiator 4 through a control channel CO4-13. The control unit 20 is further adapted to control the operation of the one or more shutters 16 in the supply air heat exchanger radiator 4 or with it in air flow connection as described in the above, through a control channel CO4-16. The control unit 20 is further adapted to control the operation of the one or more feed valves 13 in the exhaust air heat exchanger radiator 7 through a control channel CO7-13. The control unit 20 is further adapted to control the operation of the one or more shutters 16 in the exhaust air heat exchanger radiator 7 or with it in air flow connection as described in the above, through a control channel CO7-16. The control unit 20 is further adapted to control the operation of the exhaust air blower 6 through a control channel CO6. The control unit 20 is further adapted to control the operation of the heat exchanger circuit pump 9 through a control channel CO9. Said control channels may be implemented with a fixed or wireless connection.

In a usage situation of normal ventilation, so for example in such a usage situation of the ventilation arrangement 1 where there are people in the building and the ventilation is set to the power corresponding with the usage situation in question, the supply air blower 3, exhaust air blower 6, and pump 9 of the heat exchanger circuit are set to operate at the power corresponding to the usage situation in question. Further in the supply air heat exchanger radiator 4 the shutter 16 and the feed valve 13 are in their opened modes shown in Figures 2a, 2b, whereby both supply air and heat transfer liquid may flow freely through both heat exchanger cells 10a, 10b in the supply air heat exchanger radiator 4. Further in the exhaust air heat exchanger radiator 7 the shutter 16 and the feed valve 13 are in their opened modes shown in Figures 2a, 2b, whereby both supply air and heat transfer liquid may flow freely through both heat exchanger cells 10a, 10b in the exhaust air heat exchanger radiator 7. In the normal usage situation of ventilation shown in Figures 2 and 2b, it is assumed that approximately one half of new air coming to a building through the heat exchanger radiator 4 is intended to come through the first heat exchanger cell 10a and the other half is intended to come through the second heat exchanger cell 10b, and correspondingly approximately one half of air to be removed from the building through the heat exchanger radiator 7 is intended to exit through the first heat exchanger cell 10a and the other half is intended to exit through the second heat exchanger cell 10b.

When switching from the usage situation of normal ventilation to a situation of restricted ventilation, so for example to such a usage situation where there are presumably no users in the building, the power of ventilation or in other words the amount of air replaced in the building may be decreased. It is assumed in this example that the power of ventilation is halved, so in other words the amount of air replaced in the building is halved. As a results, the control unit 20 controls, through the corresponding control channels, the operation of the supply air blower 3 and exhaust air blower 6 so that the amount of air brought in the building through the supply air channel 2 and removed from the building through the exhaust air channel 5 is substantially halved.

As a response to the halving of the amount of air brought in the building through the supply air channel 2 and removed from the building through the exhaust air channel 5 both in the supply air heat exchanger radiator 4 and in the exhaust air heat exchanger radiator 7 the control unit 20 is adapted to control the shutters 16 into the closed mode shown in Figures 3a and 3b. In this case, all the replacement air brought in the building, the amount of which is now about one half of the amount of air in a normal usage situation, is led to pass in the supply air heat exchanger radiator 4 through only the second heat exchanger cell 10b. Correspondingly, all the air to be removed from the building, the amount of which is now about one half of the amount of air in a normal usage situation, is led to pass in the exhaust air heat exchanger radiator 7 through only the second heat exchanger cell 10b. As a result of the closing of the shutters 16, the front surface area of both the supply air heat exchanger radiator 4 and exhaust air heat exchanger radiator 7, that is, the surface area of both the supply air heat exchanger radiator 4 and exhaust air heat exchanger radiator 7, which takes part in the heat exchange, is reduced, so in this case halved. However, the flow rate of the supply air brought into the building and exhaust air removed from the building is kept essentially unchanged at the values according to the normal usage situation.

Further in response to the reduction of the amount of air replaced in the building the control unit 20 is adapted to control the feed valve 13 connected to the first heat exchanger cell 10a both in the supply air heat exchanger radiator 4 and the exhaust air heat exchanger cell 7 to its closed mode to change the amount of heat transfer liquid flowing in the heat exchanger radiators 4, 7, so in this case to reduce said amount, in relation to the change in the amount of air to be replaced in the building. This results in that the flow of heat transfer liquid to the first heat exchanger cell 10a is prevented both in the supply air heat exchanger radiator 4 and exhaust air heat exchanger radiator 7. In other words, the heat transfer liquid can flow both in the supply air heat exchanger radiator 4 and the exhaust air heat exchanger radiator 7 only in the second heat exchanger cell 10b, so the heat exchanger cell through which the replacement air brought in the building or the air removed from the building is led to pass in the usage situation of restricted ventilation. In the usage situation of restricted ventilation both in the supply air heat exchanger radiator 4 and exhaust air heat exchanger radiator 7 both air and heat transfer liquid flow only through one heat exchanger cell 10a, 10b as shown in Figures 3a and 3b.

Further in response to the reduction of air replaced in the building, the control unit 20 is adapted to control the operation of the pump 9 of the heat exchanger circuit so that the amount of heat transfer liquid flowing in the heat exchanger radiators 4, 7 is reduced in relation to the change in the amount of air to be replaced. In the case of this example the amount of heat transfer liquid flowing in the heat exchanger radiators 4, 7 is substantially halved compared to the situation of normal ventilation, because the heat transfer liquid is not fed to the first heat exchanger cells 10a of the heat exchanger radiators 4, 7. The flow rate of the heat transfer liquid in the heat exchanger radiators 4, 7, so in practice in the heat exchanger cell 10b remaining in use, is kept substantially unchanged at the value of the normal usage situation, when the amount of air replaced in the building is reduced. The flow amount of the heat transfer liquid flowing in the heat exchanger radiators 4, 7 can be lowered, because the amount of air replaced in the building is reduced, whereby a smaller flow of heat transfer liquid is perfectly adequate to implement the required heat transfer between the replaced air and heat transfer liquid.

When the ventilation arrangement 1 is restored to operate in the normal ventilation usage situation, the control unit 20 is adapted to control the operation of the supply air blower 3 and exhaust air blower 6 to correspond with the operation according to the normal usage situation. In response to this, the control unit 20 is further adapted to control the feed valves 13 and shutters 16 in both the supply air heat exchanger radiator 4 and exhaust air heat exchanger radiator 7 to their opened mode, and to control the operation of the pump 9 of the heat exchanger circuit to correspond with the normal usage situation. In such a case, both in the supply air heat exchanger radiator 4 and exhaust air heat exchanger radiator 7 both air and heat transfer liquid flow through both heat exchanger cells 10a, 10b as shown in Figures 2a and 2b.

In the presented solution, in response to the change in the amount of air replaced in the building, the front surface area of the heat exchanger radiators, so the surface area of the heat exchanger radiators which takes part in the heat transfer, and the amount of flow of the heat transfer liquid in the heat exchanger radiators are changed in the corresponding proportion. In the solution set forth, the surface area taking part in heat transfer and the amount of flow of the heat transfer liquid are matched to correspond substantially with the changed amount of flow of the replaced air. As a result, the efficiency of the heat exchanger radiators 4, 7 is increased in the restricted ventilation situation compared to the prior art solution in which the surface area taking part in heat exchange and the flow of the heat transfer liquid are kept unchanged as the amount of air replaced in the building is reduced. In addition, the total efficiency of the ventilation arrangement in the restricted ventilation usage situation is enhanced by the reduction in the energy among needed to run the pump 9 of the heat exchanger circuit due to the fact that in the restricted ventilation usage situation the flow amount of the heat transfer liquid in the heat exchanger radiators 4, 7 is reduced from the normal ventilation situation proportionally to the reduction of the amount of air replaced in the building.

In accordance with a system example, the surface area of the heat exchanger radiators 4, 7 of supply air and exhaust air is 2.40 m², the amount of supply air to the building is 2.80 m3/s, and the supply air flow rate 1.17 m/s and the amount of air removed from the building is 3.00 m3/s, and the exhaust air flow rate is 1.25 m/s. In a usage situation of restricted ventilation according to prior art, the amount of air brought in the building and flow rate as well as the amount of air and flow rate removed from the building are essentially halved but the surface area of the heat exchanger radiators 4, 7 taking part in the heat transfer and the flow amount of the heat transfer liquid in the heat exchanger radiators 4, 7 are kept the same so at the values of the normal ventilation usage situation. In such a case, when the outdoor temperature is 0 °C, the temperature of the air coming in the building is 19 °C, and the temperature of the air removed from the building is 21 °C, the heat recovery efficiency is 0.46 in the usage situation of restricted ventilation in the exemplary arrangement in question.

In a usage situation of restricted ventilation of the same example, also the surface area of the heat exchanger radiators taking part in the heat transfer and the flow of the heat transfer liquid in the heat exchanger radiators is halved, but the flow rate of the replaced air and the flow rate of the heat transfer liquid in the heat exchanger radiators is kept substantially unchanged, so at the value of the normal ventilation usage situation, or they are not at least reduced in the same proportion to reduce the amount of air replaced in the building. So, with reference to Figures 3a, 3b, the flow of air and heat transfer liquid through the first heat exchanger cells 10a of the heat exchanger radiators 4, 7 is prevented. In such a case, when the outdoor temperature is 0 °C, the temperature of the air coming in the building is 19 °C, and the temperature of the air removed from the building is 21 °C, the heat recovery efficiency is 0.65 in the usage situation of restricted ventilation. The efficiency of heat recovery in the restricted ventilation usage situation and ventilation arrangement of the example is approximately 29 % better compared to the previously known solution. Generally the presented solution in a restricted ventilation usage situation may, depending on the dimensioning of the ventilation arrangement, improve heat recovery efficiency by approximately 10 to 40 %. The total energy consumption is further reduced by the smaller power needed to run the pump 9 of the heat exchanger circuit in a restricted ventilation usage situation.

In the example above, both the supply air heat exchanger radiator 4 and the exhaust air heat exchanger radiator 7 comprise two heat exchanger cells 10a, 10b which by their surface areas taking part in heat exchange are equally large and of which a shutter 16 and feed valve 13 are arranged in connection with the first heat exchanger cell 10a. However, both the supply air heat exchanger radiator 4 and exhaust air heat exchanger radiator 7 may comprise three or more heat exchanger cells that are by their surface areas taking part in heat transfer different from each other, and in connection with two or more of which a shutter 16 and feed valve 13 are arranged. In such a case at least one heat exchanger cell is not equipped with a shutter 16 and feed valve 13, the heat exchanger cell in question advantageously corresponding with such a restricted ventilation situation which corresponds with the amount of air that must at least be replaced in the building when the building is unoccupied. The utilization of a plurality of heat exchanger cells provided with shutters 16 and feed valves 13 allows more diverse adjustment options of the ventilation arrangement according to, for example, the number of people in the building or other operations in use in the building.

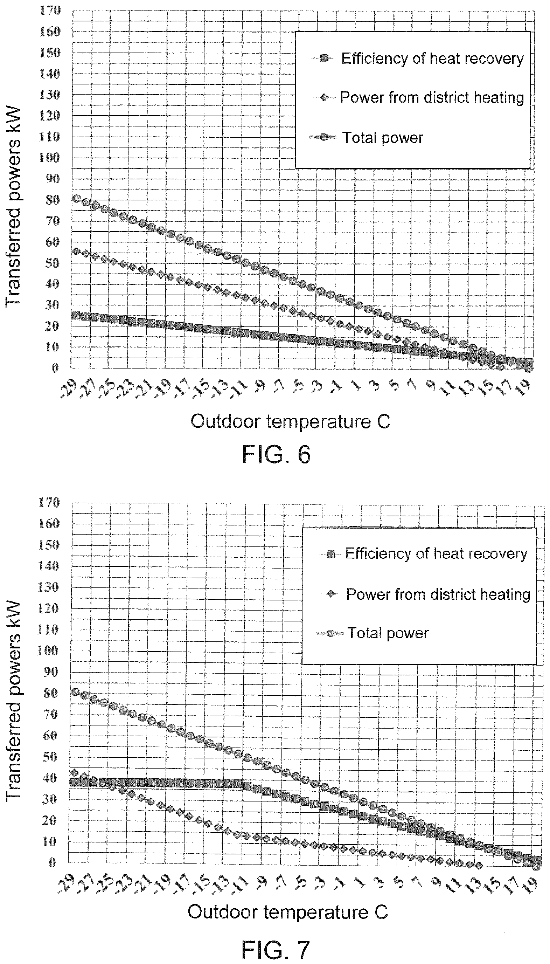

The advantages of the solution set forth may also be seen in the examples of Figures 6 and 7. Figure 6 shows the powers transferred in connection with a prior art ventilation arrangement when said prior art ventilation arrangement is used in a usage situation of restricted ventilation. Figure 7 shows the powers transferred in connection with the inventive ventilation arrangement dimensioned in a similar manner when said inventive ventilation arrangement is used in a usage situation of restricted ventilation. When comparing Figure 7 to Figure 6, it may be observed that the heat recovery efficiency on the inventive ventilation arrangement is clearly better than in the prior art ventilation arrangement, whereby when the inventive solution is used from the outside, from district heating in this case, the additional heating power is notably smaller than when using the prior art ventilation arrangement.

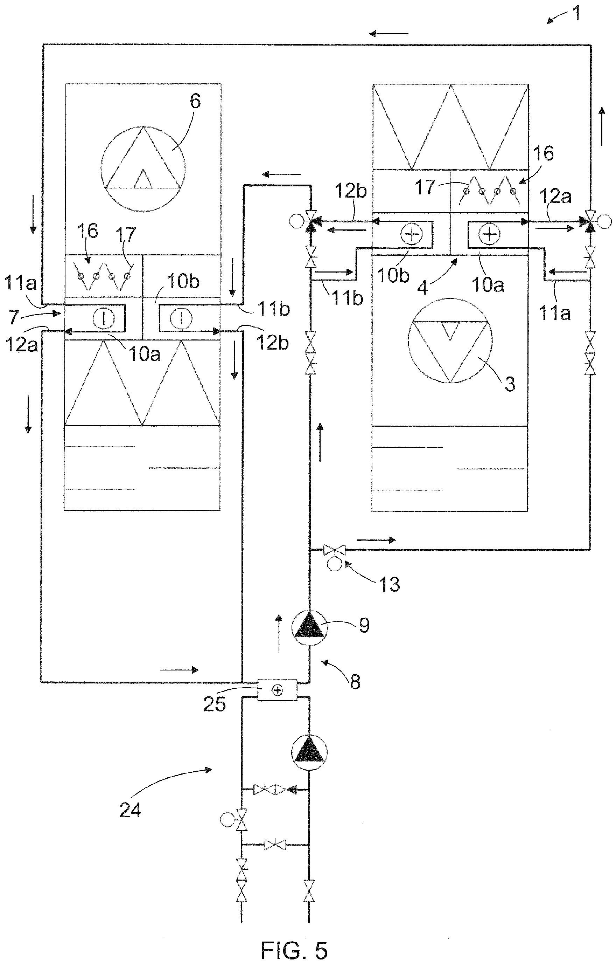

Figure 5 is a schematic view of an embodiment of a ventilation arrangement 1 of Figure 1. The structure of the ventilation arrangement 1 of Figure 5 is substantially similar to the one shown in Figures 1, 2a, 2b, 3a, and 3b. The most significant deviation to the embodiment of Figures 2a, 2b, 3a, and 3c is the fact that in the ventilation arrangement 1 of Figure 5 there is one feed valve 13, only, which in its opened mode allows the heat transfer liquid flow to both the first heat exchanger cell 10a of the supply air heat exchanger radiator 4 and the first heat exchanger cell 10a of the exhaust air heat exchanger radiator 7, and in the closed mode prevents the heat transfer liquid flow to both the first heat exchanger cell 10a of the supply air heat exchanger radiator 4 and the first heat exchanger cell 10a of the exhaust air heat exchanger radiator 7.

Figure 1 further shown in schematic form an additional heat source 24 and a heat exchanger radiator 25 placed between the additional heat source 24 and the heat exchanger circuit 8. By means of the additional heat source 24, the temperature of the heat transfer liquid led to the supply air heat exchanger radiator 4 may be further increased, which may be necessary in very cold weather when the air coming in the building is very cold. District heating, for example, may be used as the additional heat source 24 but also any other heat source.

In the example above, the heat exchanger radiators are intended to transfer heat between air and heat transfer liquid, but the heat exchanger radiators described may be used to transfer heat also between other gasses than air and heat transfer liquid.

A person skilled in the art will find it obvious that, as technology advances, the basic idea of the invention may be implemented in many different ways. The invention and its embodiments are thus not restricted to the above-described examples but may vary within the scope of the claims.

## Claims

1. A ventilation arrangement (1) of a building, having
at least one supply air channel (2) in connection with which there is at least one supply air heat exchanger radiator (4) to heat/cool the supply air,
at least one exhaust air channel (5) in connection with which there is at least one exhaust air heat exchanger radiator (7) to heat/cool the exhaust air,
at least one heat exchanger circuit (8) based on the circulation of heat transfer liquid to conduct heating/cooling to the heat exchanger radiator (4) of the supply air channel (2) and the heat exchanger radiator (7) of the exhaust air channel (5),
a control unit (20) to change the amount of air to be replaced in the building by changing the amount of air brought in the building through said at least one supply air channel (2) and by changing in the corresponding proportion the amount of exhaust air removed through at least one exhaust air channel (5) in air flow connection with said at least one supply air channel (2),
**characterised in that**
the control unit (20) is adapted to change the surface area of said supply air and exhaust air heat exchanger radiators (4, 7), which takes part in the heat exchange, in relation to the change in the amount of air replaced in the building, and **in that**
the control unit (20) is adapted to change the amount of heat transfer liquid fed to said supply air and exhaust air heat exchanger radiators (4, 7) in relation to the change in the amount of air replaced in the building without substantially changing the rate of flow of the heat transfer liquid in the heat exchanger radiators (4, 7).

2. A ventilation system in a building as claimed in claim 1, **characterised in that** the ventilation system of the building (1) has
in at least one supply air heat exchanger radiator (4) at least two liquid-air heat exchanger cells (10a, 10b) adapted at least partly in parallel in relation to the direction of the flow of air,
in at least one exhaust air heat exchanger radiator (7) at least two liquid-air heat exchanger cells (10a, 10b) adapted at least partly in parallel in relation to the direction of the flow of air,
at least one first shutter element in whose opened mode air flow through at least one heat exchange cell (10a) of at least one supply air heat exchanger radiator (4) is allowed, and in whose closed mode, air flow through the heat exchanger cell (10a) is prevented.
at least one second shutter element in whose opened mode air flow through at least one heat exchange cell (10a) of at least one exhaust air heat exchanger radiator (7) is allowed, and in whose closed mode, air flow through the heat exchanger cell (10a) in question is prevented, and
the control unit (20) is adapted to control said at least one first shutter element and said at least one second shutter element in an open and closed mode and the amount of heat transfer liquid flowing to said at least one supply air heat exchanger radiator (4) and the amount of heat transfer liquid flowing to said at least one exhaust air heat exchanger radiator (7) in response to a change in the amount of air replaced in the building.

3. A ventilation arrangement of a building as claimed in claim 2, **characterised in that** there is, in the supply air heat exchanger radiator (4), in connection with each feed opening (11a) of at least one heat exchanger cell (10a) corresponding to said at least one first shutter element, an openable and closable feed valve (13) in whose opened mode the flow of heat transfer liquid to said heat exchanger cell (10a) is allowed, and in whose closed mode the flow of heat transfer liquid to said heat exchanger cell (10a) is prevented, and **in that**
the exhaust air heat exchanger radiator (7) has, in connection with each feed opening (11a) of at least one heat exchanger cell (10a) corresponding to said at least one second shutter element, an openable and closable feed valve (13) in whose opened mode the flow of heat transfer liquid to said heat exchanger cell (10a) is allowed, and in whose closed mode the flow of heat transfer liquid to said heat exchanger cell (10a) is prevented, and **in that**
said shutter elements are adapted to be controlled to their closed mode, preventing air flow through corresponding heat exchanger cells (10a) and **in that**
said one or more feed valve (13) is adapted to be controlled to its/their closed mode, preventing the flow of the heat transfer liquid to the heat exchanger cells (10a) in connection with the feed valve/ feed valves (13) in response to a reduction of the amount of air replaced in the building.

4. A ventilation arrangement of a building as claimed in claim 2 or 3, **characterised in that** there is, in the supply air heat exchanger radiator (4), in connection with each feed opening (11a) of at least one heat exchanger cell (10a) corresponding to said at least one first shutter element, an openable and closable feed valve (13) in whose opened mode the flow of heat transfer liquid to said heat exchanger cell (10a) is allowed, and in whose closed mode the flow of heat transfer liquid to said heat exchanger cell (10a) is prevented, and **in that**
the exhaust air heat exchanger radiator (7) has, in connection with each feed opening (11a) of at least one heat exchanger cell (10a) corresponding to said at least one second shutter element, an openable and closable feed valve (13) in whose opened mode the flow of heat transfer liquid to said heat exchanger cell (10a) is allowed, and in whose closed mode the flow of heat transfer liquid to said heat exchanger cell (10a) is prevented, and **in that**
said shutter elements are adapted to be controlled to their opened mode, allowing air flow through the corresponding heat exchanger cells (10a) and **in that**
said one or more feed valve (13) is adapted to be controlled to its/their opened mode, allowing the flow of the heat transfer liquid to the heat exchanger cells (10a) in connection with the feed valve/ feed valves (13) in response to an increase of the amount of air replaced in the building.

5. A method for using a ventilation arrangement (1) of a building, the ventilation arrangement (1) having
at least one supply air channel (2) in connection with which there is at least one supply air heat exchanger radiator (4) to heat/cool the supply air,
at least one exhaust air channel (5) in connection with which there is at least one exhaust air heat exchanger radiator (7) to heat/cool the exhaust air,
at least one heat exchanger circuit (8) based on the circulation of heat transfer liquid to conduct heating/cooling to the heat exchanger radiator (4) of the supply air channel (2) and the heat exchanger radiator (7) of the exhaust air channel (5), and in which method
supply air is brought in the building through said at least one supply air channel (2),
exhaust air is removed from the building through said at least one exhaust air channel (5), and
changing the amount of air to be replaced in the building by changing the amount of air brought in the building through said at least one supply air channel (2) and by changing in the corresponding proportion the amount of exhaust air removed through at least one exhaust air channel (5) in air flow connection with said at least one supply air channel (2),
**characterised by**
changing the surface area of said supply air and exhaust air heat exchanger radiators (4, 7), which takes part in the heat exchange, in relation to the change in the amount of air replaced in the building, and
changing the amount of heat transfer liquid fed to said supply air and exhaust air radiators (4, 7) in relation to the change in the amount of air replaced in the building without substantially changing the rate of flow of the heat transfer liquid in the heat exchanger radiators (4, 7).

6. A method as claimed in claim 5, **characterised in that** the ventilation system of the building (1) has
in at least one supply air heat exchanger radiator (4) at least two liquid-air heat exchanger cells (10a, 10b) adapted at least partly in parallel in relation to the direction of the flow of air,
in at least one exhaust air heat exchanger radiator (7) at least two liquid-air heat exchanger cells (10a, 10b) adapted at least partly in parallel in relation to the direction of the flow of air,
at least one first shutter element in whose opened mode air flow through at least one heat exchange cell (10a) of at least one supply air heat exchanger radiator (4) is allowed, and in whose closed mode, air flow through the heat exchanger cell (10a) is prevented.
at least one second shutter element in whose opened mode air flow through at least one heat exchange cell (10a) of at least one exhaust air heat exchanger radiator (7) is allowed, and in whose closed mode, air flow through the heat exchanger cell (10a) is prevented, and
controlling said at least one first shutter element and said at least one second shutter element in an open or closed mode and changing the amount of heat transfer liquid flowing to said at least one supply air heat exchanger radiator (4) and the the amount of heat transfer liquid flowing to said at least one exhaust air heat exchanger radiator (7) in response to a change in the amount of air replaced in the building.

7. A method as claimed in claim 6, **characterised in that** there is, in the supply air heat exchanger radiator (4), in connection with each feed opening (11a) of at least one heat exchanger cell (10a) corresponding to said at least one first shutter element, an openable and closable feed valve (13) in whose opened mode the flow of heat transfer liquid to said heat exchanger cell (10a) is allowed, and in whose closed mode the flow of heat transfer liquid to said heat exchanger cell (10a) is prevented, and **in that**
the exhaust air heat exchanger radiator (7) has, in connection with each feed opening (11a) of at least one heat exchanger cell (10a) corresponding to said at least one second shutter element, an openable and closable feed valve (13) in whose opened mode the flow of heat transfer liquid to said heat exchanger cell (10a) is allowed, and in whose closed mode the flow of heat transfer liquid to said heat exchanger cell (10a) is prevented, and **in that**
controlling said at least one first shutter element and at least one second shutter element to their closed mode, preventing air flow through corresponding heat exchanger cells (10a) and
controlling said one or more feed valve (13) to its/their closed mode, preventing the flow of the heat transfer liquid to the heat exchanger cells (10a) in connection with the feed valve/ feed valves (13) in response to a reduction of the amount of air replaced in the building.

8. A method as claimed in claim 6 or 7, **characterised in that** there is, in the supply air heat exchanger radiator (4), in connection with each feed opening (11a) of at least one heat exchanger cell (10a) corresponding to said at least one first shutter element, an openable and closable feed valve (13) in whose opened mode the flow of heat transfer liquid to said heat exchanger cell (10a) is allowed, and in whose closed mode the flow of heat transfer liquid to said heat exchanger cell (10a) is prevented, and **in that**
the exhaust air heat exchanger radiator (7) has, in connection with each feed opening (11a) of at least one heat exchanger cell (10a) corresponding to said at least one second shutter element, an openable and closable feed valve (13) in whose opened mode the flow of heat transfer liquid to said heat exchanger cell (10a) is allowed, and in whose closed mode the flow of heat transfer liquid to said heat exchanger cell (10a) is prevented, and **in that**
controlling said at least one first shutter element and at least one second shutter element to their opened mode, allowing air flow through the corresponding heat exchanger cells (10a) and
controlling said one or more feed valve (13) to its/their opened mode, allowing the flow of the heat transfer liquid to the heat exchanger cells (10a) in connection with the feed valve/ feed valves (13) in response to an increase of the amount of air replaced in the building.

## Patentansprüche

1. Lüftungsanordnung (1) eines Gebäudes, die Folgendes aufweist
mindestens einen Zuluftkanal (2), in Verbindung mit dem mindestens ein Zuluftwärmetauscherkühler (4) zum Erwärmen/Kühlen der Zuluft vorhanden ist,
mindestens einen Abluftkanal (5), in Verbindung mit dem mindestens ein Abluftwärmetauscherkühler (7) zum Erwärmen/Kühlen der Abluft vorhanden ist,
mindestens einen Wärmetauscherkreislauf (8) auf Basis der Zirkulation einer Wärmeübertragungsflüssigkeit zum Durchführen der Erwärmung/Kühlung des Wärmetauscherkühlers (4) des Zuluftkanals (2) und des Wärmetauscherkühlers (7) des Abluftkanals (5),
eine Steuereinheit (20) zum Ändern der Luftmenge, die im Gebäude zu ersetzen ist, durch Ändern der Luftmenge, die durch den mindestens einen Zuluftkanal (2) in das Gebäude gebracht wird, und durch Ändern der Abluftmenge, die durch mindestens einen Abluftkanal (5) in Luftstromverbindung mit dem mindestens einen Zuluftkanal (2) entfernt wird, im entsprechenden Verhältnis,
**dadurch gekennzeichnet, dass**
die Steuereinheit (20) angepasst ist, den Flächenbereich des Zuluft- und des Abluftwärmetauscherkühlers (4, 7) mit Bezug auf die Änderung der Luftmenge, die im Gebäude ersetzt wird, zu ändern, was beim Wärmeaustausch erfolgt, und dadurch, dass
die Steuereinheit (20) angepasst ist, die Wärmeübertragungsflüssigkeitsmenge, die dem Zuluft- und dem Abluftwärmetauscherkühler (4, 7) zugeführt wird, mit Bezug auf die Änderung der Luftmenge, die im Gebäude ersetzt wird, zu ändern, ohne die Strömungsrate der Wärmeübertragungsflüssigkeit in den Wärmetauscherkühlern (4, 7) wesentlich zu ändern.

2. Lüftungssystem in einem Gebäude nach Anspruch 1, **dadurch gekennzeichnet, dass** das Lüftungssystem des Gebäudes (1) Folgendes aufweist
mindestens zwei Flüssigkeit-Luft-Wärmetauscherzellen (10a, 10b), die mit Bezug auf die Richtung des Luftstroms mindestens teilweise parallel angepasst sind, in mindestens einem Zuluftwärmetauscherkühler (4),
mindestens zwei Flüssigkeit-Luft-Wärmetauscherzellen (10a, 10b), die mit Bezug auf die Richtung des Luftstroms mindestens teilweise parallel angepasst sind, in mindestens einem Abluftwärmetauscherkühler (7),
mindestens ein erstes Verschlusselement, in dessen geöffnetem Modus ein Luftstrom durch mindestens eine Wärmetauschzelle (10a) von mindestens einem Zuluftwärmetauscherkühler (4) erlaubt ist und in dessen geschlossenem Modus ein Luftstrom durch die Wärmetauscherzelle (10a) verhindert wird,
mindestens ein zweites Verschlusselement, in dessen geöffnetem Modus ein Luftstrom durch mindestens eine Wärmetauschzelle (10a) von mindestens einem Abluftwärmetauscherkühler (7) erlaubt ist, und in dessen geschlossenem Modus ein Luftstrom durch die betreffende Wärmetauscherzelle (10a) verhindert wird, und
die Steuereinheit (20) ist angepasst, das mindestens eine erste Verschlusselement und das mindestens eine zweite Verschlusselement in einem offenen und einem geschlossenen Modus sowie die Wärmeübertragungsflüssigkeitsmenge, die zu dem mindestens einen Zuluftwärmetauscherkühler (4) strömt, und die Wärmeübertragungsflüssigkeitsmenge, die zu dem mindestens einen Abluftwärmetauscherkühler (7) strömt, in Reaktion auf eine Änderung der Luftmenge, die im Gebäude ersetzt wird, zu steuern.

3. Lüftungsanordnung eines Gebäudes nach Anspruch 2, **dadurch gekennzeichnet, dass** im Zuluftwärmetauscherkühler (4) in Verbindung mit jeder Zulauföffnung (11a) von mindestens einer Wärmetauscherzelle (10a), die dem mindestens einen ersten Verschlusselement entspricht, ein öffenbares und schließbares Zulaufventil (13) vorhanden ist, in dessen geöffnetem Modus der Wärmeübertragungsflüssigkeitsstrom zur Wärmetauscherzelle (10a) erlaubt ist, und in dessen geschlossenem Modus der Wärmeübertragungsflüssigkeitsstrom zur Wärmetauscherzelle (10a) verhindert wird, und dadurch, dass
im Abluftwärmetauscherkühler (7) in Verbindung mit jeder Zulauföffnung (11a) von mindestens einer Wärmetauscherzelle (10a), die dem mindestens einen zweiten Verschlusselement entspricht, ein öffenbares und schließbares Zulaufventil (13) vorhanden ist, in dessen geöffnetem Modus der Wärmeübertragungsflüssigkeitsstrom zur Wärmetauscherzelle (10a) erlaubt ist und in dessen geschlossenem Modus der Wärmeübertragungsflüssigkeitsstrom zur Wärmetauscherzelle (10a) verhindert wird, und dadurch, dass
die Verschlusselemente angepasst sind, in ihren geschlossenen Modus gesteuert zu werden, wodurch ein Luftstrom durch entsprechende Wärmetauscherzellen (10a) verhindert wird, und dadurch, dass
das eine oder die mehreren Zulaufventile (13) angepasst sind, in seinen/ihren geschlossenen Modus gesteuert zu werden, wodurch der Wärmeübertragungsflüssigkeitsstrom zu den Wärmetauscherzellen (10a) in Verbindung mit dem/den Zulaufventil/Zulaufventilen (13) in Reaktion auf eine Verringerung der im Gebäude ersetzten Luftmenge verhindert wird.

4. Lüftungsanordnung eines Gebäudes nach Anspruch 2 oder 3, **dadurch gekennzeichnet, dass** im Zuluftwärmetauscherkühler (4) in Verbindung mit jeder Zulauföffnung (11a) von mindestens einer Wärmetauscherzelle (10a), die dem mindestens einen ersten Verschlusselement entspricht, ein öffenbares und schließbares Zulaufventil (13) vorhanden ist, in dessen geöffnetem Modus der Wärmeübertragungsflüssigkeitsstrom zur Wärmetauscherzelle (10a) erlaubt ist und in dessen geschlossenem Modus der Wärmeübertragungsflüssigkeitsstrom zur Wärmetauscherzelle (10a) verhindert wird, und dadurch, dass
im Abluftwärmetauscherkühler (7) in Verbindung mit jeder Zulauföffnung (11a) von mindestens einer Wärmetauscherzelle (10a), die dem mindestens einen zweiten Verschlusselement entspricht, ein öffenbares und schließbares Zulaufventil (13) vorhanden ist, in dessen geöffnetem Modus der Wärmeübertragungsflüssigkeitsstrom zur Wärmetauscherzelle (10a) erlaubt ist und in dessen geschlossenem Modus der Wärmeübertragungsflüssigkeitsstrom zur Wärmetauscherzelle (10a) verhindert wird, und dadurch, dass
die Verschlusselemente angepasst sind, in ihren geöffneten Modus gesteuert zu werden, wodurch ein Luftstrom durch die entsprechenden Wärmetauscherzellen (10a) erlaubt wird, und dadurch, dass
das eine oder die mehreren Zulaufventile (13) angepasst sind, in seinen/ihren geöffneten Modus gesteuert zu werden, wodurch der Wärmeübertragungsflüssigkeitsstrom zu den Wärmetauscherzellen (10a) in Verbindung mit dem/den Zulaufventil/Zulaufventilen (13) in Reaktion auf eine Erhöhung der im Gebäude ersetzten Luftmenge erlaubt wird.

5. Verfahren zum Verwenden einer Lüftungsanordnung (1) eines Gebäudes, wobei die Lüftungsanordnung (1) Folgendes aufweist
mindestens einen Zuluftkanal (2), in Verbindung mit dem mindestens ein Zuluftwärmetauscherkühler (4) zum Erwärmen/Kühlen der Zuluft vorhanden ist,
mindestens einen Abluftkanal (5), in Verbindung mit dem mindestens ein Abluftwärmetauscherkühler (7) zum Erwärmen/Kühlen der Abluft vorhanden ist,
mindestens einen Wärmetauscherkreislauf (8) auf Basis der Zirkulation einer Wärmeübertragungsflüssigkeit zum Durchführen der Erwärmung/Kühlung des Wärmetauscherkühlers (4) des Zuluftkanals (2) und des Wärmetauscherkühlers (7) des Abluftkanals (5), und wobei bei dem Verfahren
Zuluft durch den mindestens einen Zuluftkanal (2) in das Gebäude gebracht wird,
Abluft durch den mindestens einen Abluftkanal (5) aus dem Gebäude entfernt wird, und
Ändern der Luftmenge, die im Gebäude zu ersetzen ist, durch Ändern der Luftmenge, die durch den mindestens einen Zuluftkanal (2) in das Gebäude gebracht wird, und durch Ändern der Abluftmenge, die durch mindestens einen Abluftkanal (5) in Luftstromverbindung mit dem mindestens einen Zuluftkanal (2) entfernt wird, im entsprechenden Verhältnis,
**gekennzeichnet durch**
Ändern des Flächenbereichs des Zuluft- und des Abluftwärmetauscherkühlers (4, 7) mit Bezug auf die Änderung der Luftmenge, die im Gebäude ersetzt wird, was beim Wärmeaustausch erfolgt, und
Ändern der Wärmeübertragungsflüssigkeitsmenge, die dem Zuluft- und dem Abluftkühler (4, 7) zugeführt wird, mit Bezug auf die Änderung der Luftmenge, die im Gebäude ersetzt wird, ohne die Strömungsrate der Wärmeübertragungsflüssigkeit in den Wärmetauscherkühlern (4, 7) wesentlich zu ändern.

6. Verfahren nach Anspruch 5, **dadurch gekennzeichnet, dass** das Lüftungssystem des Gebäudes (1) Folgendes aufweist
mindestens zwei Flüssigkeit-Luft-Wärmetauscherzellen (10a, 10b), die mit Bezug auf die Richtung des Luftstroms mindestens teilweise parallel angepasst sind, in mindestens einem Zuluftwärmetauscherkühler (4),
mindestens zwei Flüssigkeit-Luft-Wärmetauscherzellen (10a, 10b), die mit Bezug auf die Richtung des Luftstroms mindestens teilweise parallel angepasst sind, in mindestens einem Abluftwärmetauscherkühler (7),
mindestens ein erstes Verschlusselement, in dessen geöffnetem Modus ein Luftstrom durch mindestens eine Wärmetauschzelle (10a) von mindestens einem Zuluftwärmetauscherkühler (4) erlaubt ist und in dessen geschlossenem Modus ein Luftstrom durch die Wärmetauscherzelle (10a) verhindert wird,
mindestens ein zweites Verschlusselement, in dessen geöffnetem Modus ein Luftstrom durch mindestens eine Wärmetauschzelle (10a) von mindestens einem Abluftwärmetauscherkühler (7) erlaubt ist, und in dessen geschlossenem Modus ein Luftstrom durch die Wärmetauscherzelle (10a) verhindert wird, und
Steuern des mindestens einen ersten Verschlusselements und des mindestens einen zweiten Verschlusselements in einem offenen oder einem geschlossenen Modus sowie Ändern der Wärmeübertragungsflüssigkeitsmenge, die zu dem mindestens einen Zuluftwärmetauscherkühler (4) strömt, und der Wärmeübertragungsflüssigkeitsmenge, die zu dem mindestens einen Abluftwärmetauscherkühler (7) strömt, in Reaktion auf eine Änderung der Luftmenge, die im Gebäude ersetzt wird.

7. Verfahren nach Anspruch 6, **dadurch gekennzeichnet, dass** im Zuluftwärmetauscherkühler (4) in Verbindung mit jeder Zulauföffnung (11a) von mindestens einer Wärmetauscherzelle (10a), die dem mindestens einen ersten Verschlusselement entspricht, ein öffenbares und schließbares Zulaufventil (13) vorhanden ist, in dessen geöffnetem Modus der Wärmeübertragungsflüssigkeitsstrom zur Wärmetauscherzelle (10a) erlaubt ist und in dessen geschlossenem Modus der Wärmeübertragungsflüssigkeitsstrom zur Wärmetauscherzelle (10a) verhindert wird, und dadurch, dass
im Abluftwärmetauscherkühler (7) in Verbindung mit jeder Zulauföffnung (11a) von mindestens einer Wärmetauscherzelle (10a), die dem mindestens einen zweiten Verschlusselement entspricht, ein öffenbares und schließbares Zulaufventil (13) vorhanden ist, in dessen geöffnetem Modus der Wärmeübertragungsflüssigkeitsstrom zur Wärmetauscherzelle (10a) erlaubt ist und in dessen geschlossenem Modus der Wärmeübertragungsflüssigkeitsstrom zur Wärmetauscherzelle (10a) verhindert wird, und dadurch, dass
Steuern des mindestens einen ersten Verschlusselements und des mindestens einen zweiten Verschlusselements in deren geschlossenem Modus, wodurch ein Luftstrom durch entsprechende Wärmetauscherzellen (10a) verhindert wird, und
Steuern des einen oder der mehreren Zulaufventile (13) in seinen/ihren geschlossenen Modus, wodurch der Wärmeübertragungsflüssigkeitsstrom zu den Wärmetauscherzellen (10a) in Verbindung mit dem/den Zulaufventil/Zulaufventilen (13) in Reaktion auf eine Verringerung der im Gebäude ersetzten Luftmenge verhindert wird.

8. Verfahren nach Anspruch 6 oder 7, **dadurch gekennzeichnet, dass** im Zuluftwärmetauscherkühler (4) in Verbindung mit jeder Zulauföffnung (11a) von mindestens einer Wärmetauscherzelle (10a), die dem mindestens einen ersten Verschlusselement entspricht, ein öffenbares und schließbares Zulaufventil (13) vorhanden ist, in dessen geöffnetem Modus der Wärmeübertragungsflüssigkeitsstrom zur Wärmetauscherzelle (10a) erlaubt ist und in dessen geschlossenem Modus der Wärmeübertragungsflüssigkeitsstrom zur Wärmetauscherzelle (10a) verhindert wird, und dadurch, dass
im Abluftwärmetauscherkühler (7) in Verbindung mit jeder Zulauföffnung (11a) von mindestens einer Wärmetauscherzelle (10a), die dem mindestens einen zweiten Verschlusselement entspricht, ein öffenbares und schließbares Zulaufventil (13) vorhanden ist, in dessen geöffnetem Modus der Wärmeübertragungsflüssigkeitsstrom zur Wärmetauscherzelle (10a) erlaubt ist und in dessen geschlossenem Modus der Wärmeübertragungsflüssigkeitsstrom zur Wärmetauscherzelle (10a) verhindert wird, und dadurch, dass
Steuern des mindestens einen ersten Verschlusselements und des mindestens einen zweiten Verschlusselements in deren geöffnetem Modus, wodurch ein Luftstrom durch die entsprechenden Wärmetauscherzellen (10a) erlaubt wird, und
Steuern des einen oder der mehreren Zulaufventile (13) in seinen/ihren geöffneten Modus, wodurch der Wärmeübertragungsflüssigkeitsstrom zu den Wärmetauscherzellen (10a) in Verbindung mit dem/den Zulaufventil/Zulaufventilen (13) in Reaktion auf eine Erhöhung der im Gebäude ersetzten Luftmenge erlaubt wird.

## Revendications

1. Agencement de ventilation (1) d'un bâtiment, ayant :
au moins un canal d'air d'alimentation (2) en relation avec lequel, on trouve au moins un radiateur d'échangeur de chaleur d'air d'alimentation (4) pour chauffer/refroidir l'air d'alimentation,
au moins un canal d'air d'échappement (5) en relation avec lequel, on trouve au moins un radiateur d'échangeur de chaleur d'air d'échappement (7) pour chauffer/refroidir l'air d'échappement,
au moins un circuit d'échangeur de chaleur (8) basé sur la circulation du liquide de transfert de chaleur pour amener le chauffage/refroidissement au radiateur d'échangeur de chaleur (4) du canal d'air d'alimentation (2) et au radiateur d'échangeur de chaleur (7) du canal d'air d'échappement (5),
une unité de commande (20) pour modifier la quantité d'air à remplacer dans le bâtiment en modifiant la quantité d'air amenée dans le bâtiment par le biais dudit au moins un canal d'air d'alimentation (2) et en modifiant, en proportion correspondante, la quantité d'air d'échappement retirée par le biais du au moins un canal d'air d'échappement (5) en raccordement d'écoulement d'air avec ledit au moins un canal d'air d'alimentation (2),
**caractérisé en ce que** :
l'unité de commande (20) est adaptée pour modifier la surface desdits radiateurs d'échangeur de chaleur d'air d'alimentation et d'air d'échappement (4, 7), qui participe à l'échange de chaleur, par rapport au changement de la quantité d'air remplacée dans le bâtiment, et **en ce que** :
l'unité de commande (20) est adaptée pour modifier la quantité de liquide de transfert de chaleur fournie auxdits radiateurs d'échangeur de chaleur d'air d'alimentation et d'air d'échappement (4, 7) par rapport au changement de quantité d'air remplacée dans le bâtiment sans modifier sensiblement le débit du liquide de transfert de chaleur dans les radiateurs d'échangeur de chaleur (4, 7).

2. Système de ventilation dans un bâtiment selon la revendication 1, **caractérisé en ce que** le système de ventilation du bâtiment (1) a :
dans au moins un radiateur d'échangeur de chaleur d'air d'alimentation (4), au moins deux cellules d'échangeur de chaleur liquide-air (10a, 10b) adaptées au moins partiellement en parallèle par rapport à la direction de l'écoulement d'air,
dans au moins un radiateur d'échangeur de chaleur d'air d'échappement (7), au moins deux cellules d'échangeur de chaleur liquide-air (10a, 10b) adaptées au moins partiellement en parallèle par rapport à la direction de l'écoulement d'air,
au moins un premier élément de volet d'obturation, dans le mode ouvert duquel, l'écoulement d'air par au moins une cellule d'échange de chaleur (10a) d'au moins un radiateur d'échangeur de chaleur d'air d'alimentation (4) est autorisé, et dans le mode fermé duquel, l'écoulement d'air par au moins une cellule d'échangeur de chaleur (10a) est empêché,
au moins un second élément de volet d'obturation, dans le mode ouvert duquel, l'écoulement d'air dans au moins une cellule d'échange de chaleur (10a) d'au moins un radiateur d'échangeur de chaleur d'air d'échappement (7) est autorisé, et dans le mode fermé duquel, l'écoulement d'air dans la cellule d'échangeur de chaleur (10a) en question est empêché, et
l'unité de commande (20) est adaptée pour commander ledit au moins un premier élément de volet d'obturation et ledit au moins un second élément de volet d'obturation dans un mode ouvert et fermé et la quantité de liquide de transfert de chaleur s'écoulant vers ledit au moins un radiateur d'échangeur de chaleur d'air d'alimentation (4) et la quantité de liquide de transfert de chaleur s'écoulant vers ledit au moins un radiateur d'échangeur de chaleur d'air d'échappement (7) en réponse à un changement de la quantité d'air remplacé dans le bâtiment.

3. Agencement de ventilation d'un bâtiment selon la revendication 2, **caractérisé en ce qu'**il y a, dans le radiateur d'échangeur de chaleur d'air d'alimentation (4), en relation avec chaque ouverture d'alimentation (11a) d'au moins une cellule d'échangeur de chaleur (10a) correspondant audit au moins un premier élément de volet d'obturation, une valve d'alimentation (13) pouvant s'ouvrir et se fermer, dans le mode ouvert de laquelle, l'écoulement du liquide de transfert de chaleur est autorisé vers ladite cellule d'échangeur de chaleur (10a), et dans le mode fermé de laquelle, l'écoulement du liquide de transfert de chaleur est empêché vers ladite cellule d'échangeur de chaleur (10a), et **en ce que** :
le radiateur d'échangeur de chaleur d'air d'échappement (7) a, en relation avec chaque ouverture d'alimentation (11a) d'au moins une cellule d'échangeur de chaleur (10a) correspondant audit au moins un second élément de volet d'obturation, une valve d'alimentation (13) pouvant s'ouvrir et se fermer, dans le mode ouvert de laquelle, l'écoulement de liquide de transfert de chaleur est autorisé vers ladite cellule d'échangeur de chaleur (10a), et dans le mode fermé de laquelle, l'écoulement du liquide de transfert de chaleur est empêché vers ladite cellule d'échangeur de chaleur (10a), et **en ce que** :
lesdits éléments de volet d'obturation sont adaptés pour être commandés dans leur mode fermé, empêchant l'écoulement d'air dans les cellules d'échangeur de chaleur (10a) correspondantes, et **en ce que** :
lesdites une ou plusieurs valves d'alimentation (13) sont adaptées pour être commandées dans son/leur mode fermé, empêchant l'écoulement du liquide de transfert de chaleur vers les cellules d'échangeur de chaleur (10a) en relation avec la valve d'alimentation/les valves d'alimentation (13) en réponse à une réduction de la quantité d'air remplacée dans le bâtiment.

4. Agencement de ventilation d'un bâtiment selon la revendication 2 ou 3, **caractérisé en ce qu'**il y a, dans le radiateur d'échangeur de chaleur d'air d'alimentation (4), en relation avec chaque ouverture d'alimentation (11a) d'au moins une cellule d'échangeur de chaleur (10a) correspondant audit au moins un premier élément de volet d'obturation, une valve d'alimentation (13) pouvant s'ouvrir et se fermer, dans le mode ouvert de laquelle, l'écoulement du liquide de transfert de chaleur est autorisé vers ladite cellule d'échangeur de chaleur (10a), et dans le mode fermé de laquelle, l'écoulement du liquide de transfert de chaleur est empêché vers ladite cellule d'échangeur de chaleur (10a), et **en ce que** :
le radiateur d'échangeur de chaleur d'air d'échappement (7) a, en relation avec chaque ouverture d'alimentation (11a) d'au moins une cellule d'échangeur de chaleur (10a) correspondant audit au moins un second élément de volet d'obturation, une valve d'alimentation (13) pouvant s'ouvrir et se fermer, dans le mode ouvert de laquelle, l'écoulement du liquide de transfert de chaleur est autorisé vers ladite cellule d'échangeur de chaleur (10a), et dans le mode fermé de laquelle, l'écoulement du liquide de transfert de chaleur est empêché vers ladite cellule d'échangeur de chaleur (10a), et **en ce que** :
lesdits éléments de volet d'obturation sont adaptés pour être commandés dans leur mode ouvert, permettant l'écoulement d'air par les cellules d'échangeur de chaleur (10a) correspondantes, et **en ce que** :
lesdites une ou plusieurs valves d'alimentation (13) sont adaptées pour être commandées dans son/leur mode ouvert, permettant l'écoulement du liquide de transfert de chaleur dans les cellules d'échangeur de chaleur (10a) en relation avec la valve d'alimentation/les valves d'alimentation (13) en réponse à une augmentation de la quantité d'air remplacée dans le bâtiment.

5. Procédé pour utiliser un agencement de ventilation (1) d'un bâtiment, l'agencement de ventilation (1) ayant :
au moins un canal d'air d'alimentation (2) en relation avec lequel, on trouve au moins un radiateur d'échangeur de chaleur d'air d'alimentation (4) pour chauffer/refroidir l'air d'alimentation,
au moins un canal d'air d'échappement (5) en relation avec lequel, on trouve un radiateur d'échangeur de chaleur d'air d'échappement (7) pour chauffer/refroidir l'air d'échappement,
au moins un circuit d'échangeur de chaleur (8) sur la base de la circulation du liquide de transfert de chaleur pour amener le chauffage/refroidissement vers le radiateur d'échangeur de chaleur (4) du canal d'air d'alimentation (2) et le radiateur d'échangeur de chaleur (7) du canal d'air d'échappement (5), et dans lequel procédé :
l'air d'alimentation est amené dans le bâtiment par le biais dudit au moins un canal d'air d'alimentation (2),
l'air d'échappement est retiré du bâtiment par le biais dudit au moins un canal d'air d'échappement (5), et
modifier la quantité d'air à remplacer dans le bâtiment en modifiant la quantité d'air amenée dans le bâtiment par le biais dudit au moins un canal d'air d'alimentation (2) et en modifiant, dans la proportion correspondante, la quantité d'air d'échappement retirée par le biais d'au moins un canal d'air d'échappement (5) en raccordement d'écoulement d'air avec ledit au moins un canal d'air d'alimentation (2),
**caractérisé par** les étapes consistant à :
modifier la surface desdits radiateurs d'échangeur de chaleur d'air d'alimentation et d'air d'échappement (4, 7) qui participe à l'échange de chaleur, par rapport à la quantité d'air remplacée dans le bâtiment, et
modifier la quantité de liquide de transfert de chaleur fournie auxdits radiateurs d'air d'alimentation et d'air d'échappement (4, 7) par rapport au changement de quantité d'air remplacée dans le bâtiment sans modifier sensiblement le débit du liquide de transfert de chaleur dans les radiateurs d'échangeur de chaleur (4, 7).

6. Procédé selon la revendication 5, **caractérisé en ce que** le système de ventilation du bâtiment (1) a :
dans au moins un radiateur d'échangeur de chaleur d'air d'alimentation (4), au moins deux cellules d'échangeur de chaleur liquide-air (10a, 10b) adaptées au moins partiellement en parallèle par rapport à la direction de l'écoulement d'air,
dans au moins un radiateur d'échangeur de chaleur d'air d'échappement (7), au moins deux cellules d'échangeur de chaleur liquide-air (10a, 10b) adaptées au moins partiellement en parallèle par rapport à la direction de l'écoulement d'air,
au moins un premier élément de volet d'obturation, dans le mode ouvert duquel, l'écoulement d'air dans au moins une cellule d'échange de chaleur (10a) d'au moins un radiateur d'échangeur de chaleur d'air d'alimentation (4) est autorisé, et dans le mode fermé duquel, l'écoulement d'air dans au moins une cellule d'échangeur de chaleur (10a) est empêché,
au moins un second élément de volet d'obturation, dans le mode ouvert duquel, l'écoulement d'air dans au moins une cellule d'échange de chaleur (10a) d'au moins un radiateur d'échangeur de chaleur d'air d'échappement (7) est autorisé, et dans le mode fermé duquel, l'écoulement d'air dans la cellule d'échangeur de chaleur (10a) en question est empêché, et
commander ledit au moins un premier élément de volet d'obturation et ledit au moins un second élément de volet d'obturation dans un mode ouvert ou fermé et modifier la quantité de liquide de transfert de chaleur s'écoulant vers ledit au moins un radiateur d'échangeur de chaleur d'air d'alimentation (4) et la quantité de liquide de transfert de chaleur s'écoulant vers ledit au moins un radiateur d'échangeur de chaleur d'air d'échappement (7) en réponse à un changement de quantité d'air remplacée dans le bâtiment.

7. Procédé selon la revendication 6, **caractérisé en ce qu'**il y a, dans le radiateur d'échangeur de chaleur d'air d'alimentation (4), en relation avec chaque ouverture d'alimentation (11a) d'au moins une cellule d'échangeur de chaleur (10a) correspondant audit au moins un élément de volet d'obturation, une valve d'alimentation (13) pouvant s'ouvrir et se fermer, dans le mode ouvert de laquelle, l'écoulement du liquide de transfert de chaleur est autorisé vers ladite cellule d'échangeur de chaleur (10a), et dans le mode fermé de laquelle, l'écoulement du liquide de transfert de chaleur est empêché vers ladite cellule d'échangeur de chaleur (10a), et **en ce que** :
le radiateur d'échangeur de chaleur d'air d'échappement (7) a, en relation avec chaque ouverture d'alimentation (11a) d'au moins une cellule d'échangeur de chaleur (10a) correspondant audit au moins un second élément de volet d'obturation, une valve d'alimentation (13) pouvant s'ouvrir et se fermer, dans le mode ouvert de laquelle, l'écoulement du liquide de transfert de chaleur est autorisé vers ladite cellule d'échangeur de chaleur (10a), et dans le mode fermé de laquelle, l'écoulement de liquide de transfert de chaleur est empêché vers ladite cellule d'échangeur de chaleur (10a), et **en ce que** :
commander ledit au moins un premier élément de volet d'obturation et au moins un second élément de volet d'obturation dans leur mode fermé, empêchant l'écoulement d'air dans les cellules d'échangeur de chaleur (10a) correspondantes, et
commander lesdites une ou plusieurs valves d'alimentation (13) dans son/leur mode fermé, empêchant l'écoulement du liquide de transfert de chaleur vers les cellules d'échangeur de chaleur (10a) en relation avec la valve d'alimentation/les valves d'alimentation (13) en réponse à une réduction de la quantité d'air remplacée dans le bâtiment.

8. Procédé selon la revendication 6 ou 7, **caractérisé en ce qu'**il y a, dans le radiateur d'échangeur de chaleur d'air d'alimentation (4), en relation avec chaque ouverture d'alimentation (11a) d'au moins une cellule d'échangeur de chaleur (10a) correspondant audit au moins un premier volet d'obturation, une valve d'alimentation (13) pouvant s'ouvrir et se fermer, dans le mode ouvert de laquelle, l'écoulement du liquide de transfert de chaleur est autorisé vers ladite cellule d'échangeur de chaleur (10a) et dans le mode fermé de laquelle, l'écoulement du liquide de transfert de chaleur est empêché vers ladite cellule d'échangeur de chaleur (10a), et **en ce que** :
le radiateur d'échangeur de chaleur d'air d'échappement (7) a, en relation avec chaque ouverture d'alimentation (11a) d'au moins une cellule d'échangeur de chaleur (10a) correspondant audit au moins un second élément de volet d'obturation, une valve d'alimentation (13) pouvant s'ouvrir et se fermer, dans le mode ouvert de laquelle, l'écoulement du liquide de transfert de chaleur est autorisé vers ladite cellule d'échangeur de chaleur (10a), et dans le mode fermé de laquelle, l'écoulement du liquide de transfert de chaleur est empêché vers ladite cellule d'échangeur de chaleur (10a), et **en ce que** :
commander ledit au moins un premier élément de volet d'obturation et au moins un second élément de volet d'obturation dans leur mode ouvert, permettant l'écoulement d'air dans les cellules d'échangeur de chaleur (10a) correspondantes, et
commander lesdites une ou plusieurs valves d'alimentation (13) dans son/leur mode ouvert, permettant l'écoulement du liquide de transfert de chaleur vers les cellules d'échangeur de chaleur (10a) en relation avec la valve d'alimentation/les valves d'alimentation (13) en réponse à une augmentation de la quantité d'air remplacée dans le bâtiment.
